# EUROPÄISCHE PATENTSCHRIFT

(11) **EP 1 574 442 B1**
(45) Veröffentlichungstag und Bekanntmachung des Hinweises auf die Patenterteilung: **11.07.2007**
(21) Anmeldenummer: 05004633.3
(22) Anmeldetag: 03.03.2005
(51) Int. Cl.: B29C 69/00, B65D 8/04, B65D 45/32

(54) **Verfahren zur Herstellung von Weithalsfässern aus thermoplastischem Kunststoff**
Method for manufacturing a barrel made of thermoplastic material
Procédé pour la fabrication d'un fût en matière thermoplastique

(30) Priorität: 11.03.2004 DE 102004011915; 13.01.2005 DE 102005001649; 31.01.2005 DE 102005004548
(43) Veröffentlichungstag der Anmeldung: 14.09.2005
(73) Patentinhaber: Schütz GmbH & Co. KGaA, 56242 Selters (DE)
(72) Erfinder: Schütz, Udo, 56242 Selters / Westerwald (DE)
(74) Vertreter: Pürckhauer, Rolf

(56) Entgegenhaltungen:
- EP-A- 0 943 420
- DE-U1- 9 414 955
- GB-A- 898 377
- US-A- 4 968 242

## Beschreibung

Zur Herstellung von aus der EP 0 943 420 A1 sowie der EP 0 781 234 B1 bekannten Weithalsfässern aus thermoplastischem Kunststoff mit einem abnehmbaren Deckel und einem Spannringverschluß kommt ein Extrusionsblasformverfahren zum Einsatz, bei dem in der ersten Verfahrensstufe ein Kunststoffschlauch aus einem Schlauchkopf extrudiert und in der zweiten Verfahrensstufe der Schlauch in einer zweiteiligen Blasform zu einem Vorformling vorgeblasen wird, der anschließend zu einem geschlossenen Faßrumpf fertiggeblasen wird, der durch den Kontakt mit den gekühlten formgebenden Wänden der Blasform erstarrt. Anschließend wird zur Herstellung der Faßöffnung der obere Boden des Faßrumpfes mittels eines Schneidwerkzeugs durch einen konzentrisch zur Längsachse des Faßrumpfes geführten Schnitt aus dem Faßrumpf herausgeschnitten. Danach wird auf dem Öffnungsrand der Deckelfasskörper ein einfacher Fassdeckel oder ein Spunddeckel mit Dichtung mittels eines Spannringes befestigt. Die Verschlussdeckel der Weithalsfässer werden mit einer Spritzgießmaschine hergestellt. Die Fertigung der Weithals-Deckelfässer erfordert eine Blasformmaschine und eine Spritzgießmaschine mit hohen Anschaffungskosten.

Die GB 898 377 beschreibt ein Verfahren zur Herstellung von Kunststoffbehältern mit einem Hals, dessen konische Öffnung mit einem passenden konischen Stopfen verschließbar ist. Zur Herstellung der Behälter wird ein Kunststoffschlauch in eine geöffnete zweiteilige Blasform extrudiert. Nach dem Schließen der beiden Formhälften wird eine hohle Blasnadel in den Kunststoffschlauch eingestoßen, der mittels durch die Blasnadel zugeführter Blasluft zu einem hohlen Formteil mit einem Behälterkörper mit einem konischen Hals, einem konischen Stopfen und einem Zwischenring zwischen Behälterkörper und Stopfen geformt wird. Die Blasnadel wird in den Schlauchabschnitt eingestoßen, der nach dem Blasformvorgang den Zwischenring zwischen Behälterkörper und Verschlussstopfen bildet. Nach dem Blasformen wird die Blasnadel aus dem Formteil herausgezogen und nach einer ausreichenden Abkühlzeit werden die beiden Formhälften geöffnet und das Formteil wird der Blasform entnommen. Nunmehr werden der Behälterkörper und der Stopfen durch Herausschneiden des Zwischenringes voneinander getrennt und anschließend wird zum Verschließen des Behälters der konische Stopfen in die entsprechend konisch ausgebildete Öffnung des Behälterhalses eingesetzt.

Der Erfindung liegt die Aufgabe zugrunde, ein Verfahren auf der Basis des bekannten Extrusionsblasformverfahrens zur Herstellung von Weithalsfässern zu entwickeln, das das Spritzgießen der Deckel mit einer Spritzgießmaschine überflüssig macht. Ferner soll das neue Verfahren im Hinblick auf die Herstellung von elektrisch geerdeten Weithalsfässern aus thermoplastischem Kunststoff weiterentwickelt werden.

Diese Aufgabe ist erfindungsgemäß gelöst durch die Verfahren zur Herstellung von Weithalsfässern aus thermoplastischem Kunststoff mit den Merkmalen des Patentanspruches 1.

Die Unteransprüche beinhalten vorteilhafte und zweckmäßige Weiterbildungen der Erfindung.

Das erfindungsgemäße Verfahren zur Herstellung von Weithalsfässern aus thermoplastischem Kunststoff, das auf dem in der EP 0 781 234 B1 beschriebenen Extrusionsblasformverfahren zur Herstellung von Weithalsfässern beruht, macht das bisher erforderliche Spritzgießen der Faßdeckel mit einer Spritzgießmaschine überflüssig und ermöglicht die Herstellung von Kunststoff-Weithalsfässern mit einer umfassenden elektrischen Erdung, durch die sowohl die im flüssigen Füllgut und an der Innenfläche der Fässer auftretenden elektrischen Ladungen als auch die elektrischen Ladungen, die sich durch Reibung auf der Faßoberfläche bilden können, über in den Rumpf, den Boden und den Deckel der Fässer integrierte elektrisch leitende Kontaktstreifen und die leitfähige oder dauerantistatische Außenschicht der Fässer in den Boden abgeleitet werden. Die elektrisch Erdung der Faßoberfläche und des Innenraums der Fässer sowie der in diesen zu transportierenden bzw. zu lagernden Flüssigkeiten und Schüttguter ermöglicht die Verwendung der erfindungsgemäß hergestellten Fässer als Gefahrgutbehälter für feuergefährliche Flüssigkeiten, Emulsionen, Lösungsmittel, Farben und Lacke mit einem Flammpunkt < 61°C sowie für leicht entzündliche Schüttgüter und den Einsatz der Fässer in Betriebsräumen, in denen sich eine explosive Atmosphäre durch Gase, Dämpfe oder Nebel bilden kann.

Das erfindungsgemäße Verfahren zur Herstellung von Weithalsfässern ist nachstehend anhand schematischer Zeichnungsfiguren erläutert, die folgendes darstellen:
- Fig. 1: eine Längsschnittdarstellung eines einer Blasformmaschine nach dem Blasformen und dem Abkühlen entnommenen Faßkörpers mit Fußring und geschlossenem Deckel,
- Fig. 2: eine Längsschnittdarstellung von Faßrumpf und Faßdeckel nach dem Herausschneiden des für das Einführen eines Einschießblasdornes für den Blasvorgang erforderlichen Zwischenrings aus dem Faßkörper nach Fig. 1,
- Fig. 3: eine Seitenansicht eines montierten Weithalsfasses mit Fußring und geschlossenem Deckel,
- Fig. 4: eine ausschnittsweise vergrößerte Darstellung des Deckelbereichs des Weithalsfasses nach Fig. 3,
- Fig. 5: einen vergrößerten Teilquerschnitt der Faßwand des Weithalsfasses nach Fig. 3, das einem Dreischichtenaufbau aufweist,
- Fig. 6: einen der Fig. 5 entsprechenden Wandausschnitt eines Weithalsfasses mit einem Sechsschichtenaufbau, die
- Fign. 7a und 7b: ausschnittsweise vergrößerte schematische Darstellungen einer geschlossenen und einer geöffneten Blasform mit einem blasgeformten Faßkörper,
- Fig. 8: eine Längsschnittdarstellung eines entformten Faßkörpers mit Fußring und Spunddeckel sowie einem Zwischenring zum Einführen eines Einschießblasdornes,
- Fig. 9: eine Längsschnittdarstellung eines entformten Faßkörpers mit Fußring und Spunddeckel sowie einem schmalen Zwischenring, wobei der Faßkörper mittels eines in das Spundloch des Be- und Entlüftungsspundes eingeführten Blasdornes blasgeformt wurde,
- Fig. 10: eine perspektivische Darstellung eines montierten Weithalsfasses mit einer weiteren Ausführungsform eines geschlossenen Deckels und
- Fig. 11: eine ausschnittsweise vergrößerte Darstellung des Deckelbereiches des Weithalsfasses nach Fig. 10.

Bei dem Extrusionsblasformen zur Herstellung von weithalsfässern aus einem thermoplastischem Kunststoff wird in der ersten Verfahrensstufe durch den Extrusionskopf einer Blasformmaschine ein mehrschichtiger, insbesondere ein dreischichtiger Kunststoffschlauch aus einem nichtleitenden Grundwerkstoff extrudiert, der aus einer Innenschicht, einer Mittelschicht, einer leitfähigen oder dauerantistischen Außenschicht sowie mindestens einem auf dem Umfang angeordneten Kontaktstreifen aus einem elektrisch leitenden Kunststoffmaterial besteht. Der extrudierte mehrschichtige Kunststoffschlauch wird nach Schließen des oberen Schlauchendes mit einem Schließwerkzeug mittels Blasluft, die durch einen in das untere Ende des Schlauches eingeführten Blasdorn eingeleitet wird, zu einem Vorformling vorgeblasen.

Es besteht ferner die Möglichkeit, den extrudierten Schlauch nach Schließen des unteren Schlauchendes mittels über eine Düse im Extrusionskopf zugeführter Blasluft zu einem Vorformling vorzublasen.

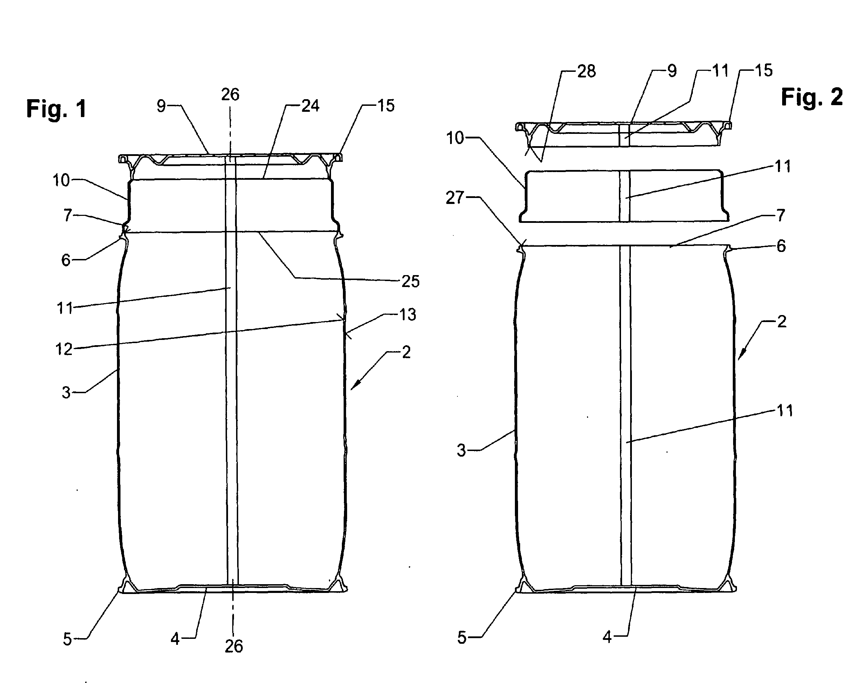

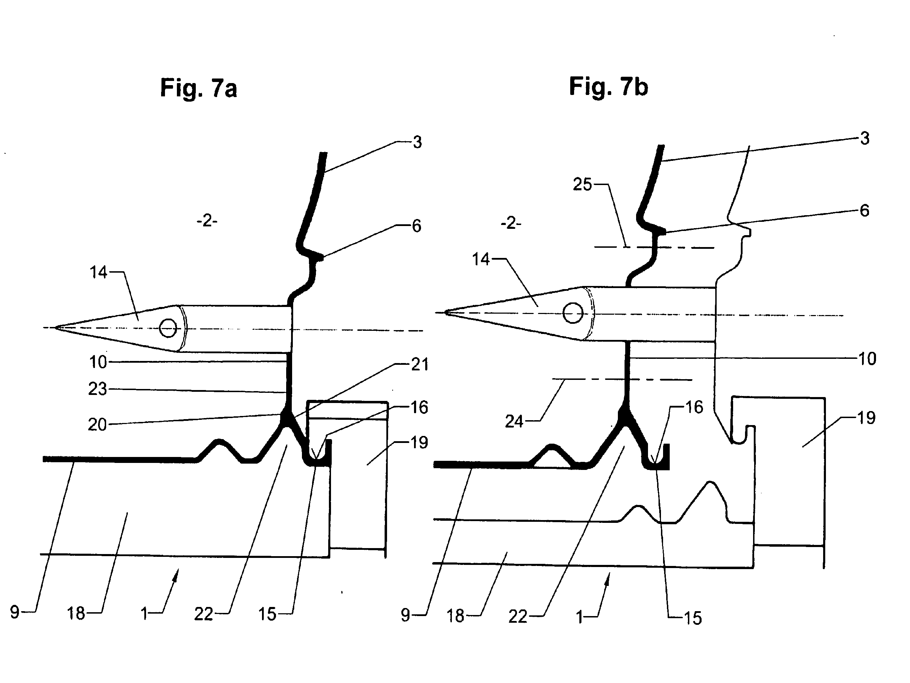

Anschließend wird nach dem Zusammenquetschen des unteren Endes des Vorformlings mittels einer Schließeinheit und dem Schließen der beiden Formhälften der geteilten Blasform 1, die in den Fign. 7a und 7b dargestellt ist, in der zweiten Verfahrensstufe der Vorformling zu einem in Fig. 1 dargestellten Faßkörper 2 mit einem Faßrumpf 3, einem Boden 4 mit einem Fußring 5, einer Bordur 6 am Faßrumpf 3 in Höhe des Öffnungsrandes 7 des herzustellenden Weithalsfasses 8, einem geschlossenen Deckel 9, einem Zwischenring 10 zwischen Bordur 6 und Deckel 9 sowie einem in den Deckel 9, den Zwischenring 10, den Faßrumpf 3 und den Faßboden 4 integrierten elektrisch leitenden Kontaktstreifen 11 vorgeblasen, der eine elektrische Verbindung zwischen der Innenfläche 12 und der Oberfläche 13 des Faßkörpers 2 bildet und dessen Stärke der Wandstärke des Faßkörpers entspricht. Die Blasluft wird über einen oder mehrere Blasdorne 14 zugeführt, der bzw. die in einen Abschnitt des Vorformlings eingeschossen wird bzw. werden, der zu dem Zwischenring 10 des Faßkörpers 2 blasgeformt wird.

Beim Koextrudieren des mehrschichtigen Kunststoffschlauches in die Blasform wird der aus einem Extrusionskopf kontinuierlich oder diskontinuierlich austretende Materialschlauch an mindestens einer Stelle auf dem Umfang aufgespaltet und in den Spaltraum ein elektrisch leitfähiges Kunststoffmaterial zur Bildung eines Kontaktstreifens eingespritzt, der mit dem Vorformling homogen verschweißt.

Bei der Faßausführung nach den Fign. 1 bis 4 wird der Faßkörper 2 mit einem geschlossenen Deckel 9 blasgeformt, der einen nach unten offenen U-förmigen Außenrand 15 mit einem Dichtungsbett 16 zur Aufnahme einer Deckeldichtung 17 aufweist. Beim Fertigblasen des Faßkörpers 2 in der Blasform 1 werden der Deckelrand 15 und dessen Dichtungsbett 16 durch zwei sich gegenläufig bewegende Formschieber 18, 19 verpreßt (Fig. 7a). Durch das Verpressen des Deckelrandes wird ein formstabiler Deckel mit einem einwandfreien, keine Nachbearbeitung erfordernden Dichtungsbett ohne einen störenden Wulst im Bereich der Formtrennebene blasgeformt.

Beim Fertigblasen eines Faßkörpers 2 in der Blasform 1 wird ein umlaufender Versteifungswulst 20 an den Übergangsabschnitt 21 zwischen einer an den Außenrand 15 des Deckels 9 anschließenden Eingreifnut 22 für einen Faßgreifer und einem unterhalb der Eingreifnut 22 angeformten Ringsteg 23 zur Versteifung des Faßdeckels angeformt.

Nach dem Abkühlen des Faßkörpers 2 mit dem geschlossenen Deckel 9, dessen U-förmiger Außenrand 15 durch die Formschieber 18, 19 von innen und außen gekühlt wird, wird die Blasform 1 geöffnet und der Faßkörper 2 der Blasform entnommen (Fig. 7b).

Anschließend wird entsprechend den Fign. 1, 2 und 7b der Zwischenring 10 entlang den Solltrennlinien 24, 25 durch zwei senkrecht zur Längsachse 26-26 des Faßkörpers 2 geführte Schnitte aus diesem herausgeschnitten und die Schnittkanten 27, 28 des Faßrumpfes 3 und des Deckels 9 werden zum Entfernen des Schnittgrates mit Heißluft beflammt.

Danach durchlaufen Faßrumpf 3 und Deckel 9 eine Kühlstrecke.

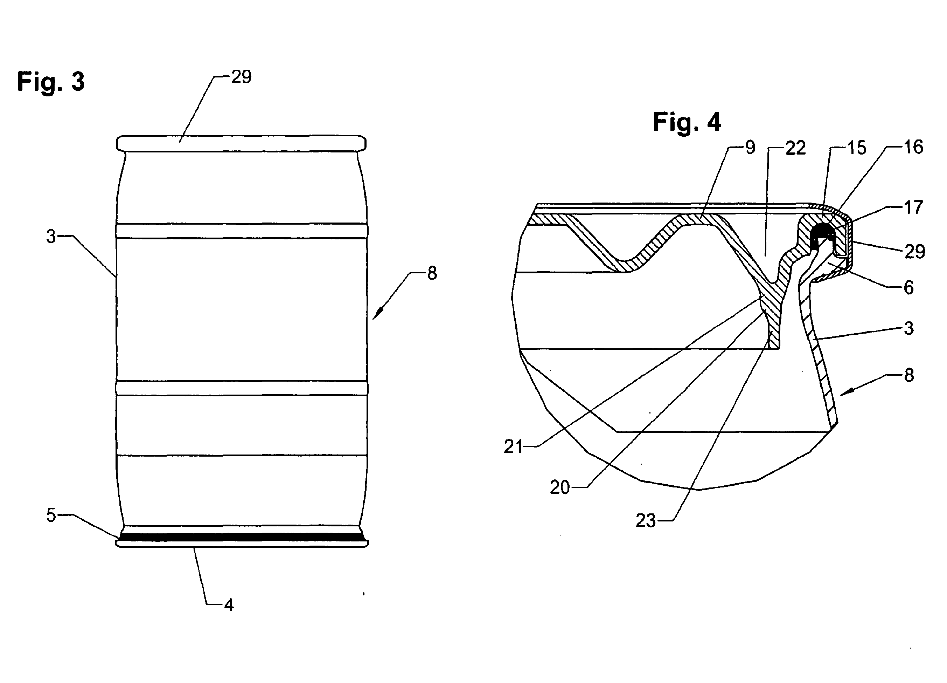

Nunmehr wird ein Dichtring 17 in das Dichtungsbett 16 des Deckels 9 eingelegt und anschließend wird bei der Endmontage des Weithalsfasses 8 der Deckel 9 mittels eines Spannringes 29 an der Bordur 6 des Faßrumpfes 3 befestigt (Fign. 3 und 4).

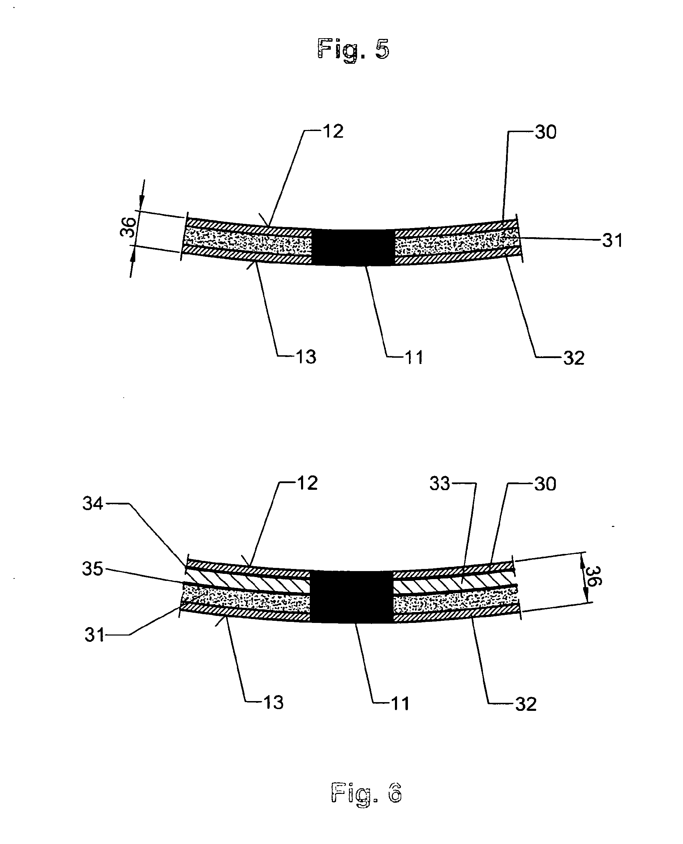

Fig. 5 zeigt einen Dreischichtenaufbau von Rumpf 3, Boden 4 und Deckel 9 des Weithalsfasses 8 mit einer Innenschicht 30, einer Mittelschicht 31 und einer leitfähigen oder dauerantistatischen Außenschicht 32, die beispielsweise einen Leitrußanteil enthalten kann.

Für die Herstellung der Mittelschicht 31 wird ein recyceltes Granulat oder Mahlgut aus reinem Polyethylen und/oder Polyethylen mit einem Leitrußanteil verwendet, und als Ausgangsmaterial für die Innen- und die Außenschicht 30, 32 dient ein neuwertiges Polyethylen-Granulat.

Fig. 6 zeigt einen Sechsschichtenaufbau eines Weithalsfasses 8 mit einer Innenschicht 30 aus reinem Polyethylen hoher Dichte (HDPE), einer Sperrschicht 33 aus Polyamid (PA) oder einem Ethylen-Vinylacetat-Copolimer (EVA) gegen die Permeation von Sauerstoff und Kohlenwasserstoffen, die in zwei Haftvermittlerschichten 34, 35 aus einem Polyethylen niedriger Dichte (LLDPE) eingebettet ist, einer Mittelschicht 31 aus recyceltem Granulat oder Mahlgut aus reinem Polyethylen hoher Dichte und/oder Polyethylen hoher Dichte mit einem Leitrußanteil sowie einer leitfähigen oder dauerantistatischen Außenschicht 32 aus Polyethylen hoher Dichte mit einem Leitrußanteil.

In den Faßrumpf 3, den Boden 4 und den Deckel 9 des Weithalsfasses 8 ist mindestens ein elektrisch leitender Kontaktstreifen 11 aus einem Polyethylen hoher Dichte mit einem Leitrußanteil integriert, der eine elektrische Verbindung zwischen der Innenfläche 12 und der Oberfläche 13 des Weithalsfasses 8 bildet und dessen Stärke der Wandstärke 36 des Fasses entspricht. Der elektrisch leitende Kontaktstreifen 11 verläuft parallel zur Faßlängsachse 26-26 über den zylindrischen Faßrumpf 3 und radial über den Boden 4 und den geschlossenen Deckel 9 des Weithalsfasses 8.

Das Weithalsfaß 8 ist über den elektrischen Kontaktstreifen 11 und die leitfähige oder dauerantistatische Außenschicht 32 elektrisch geerdet, so daß elektrische Ladungen, die an der Innenfläche 12 des Fasses 8 und im flüssigen Füllgut oder im Schüttgut sowie an der Faßoberfläche 13 auftreten, in den Boden abgeleitet werden.

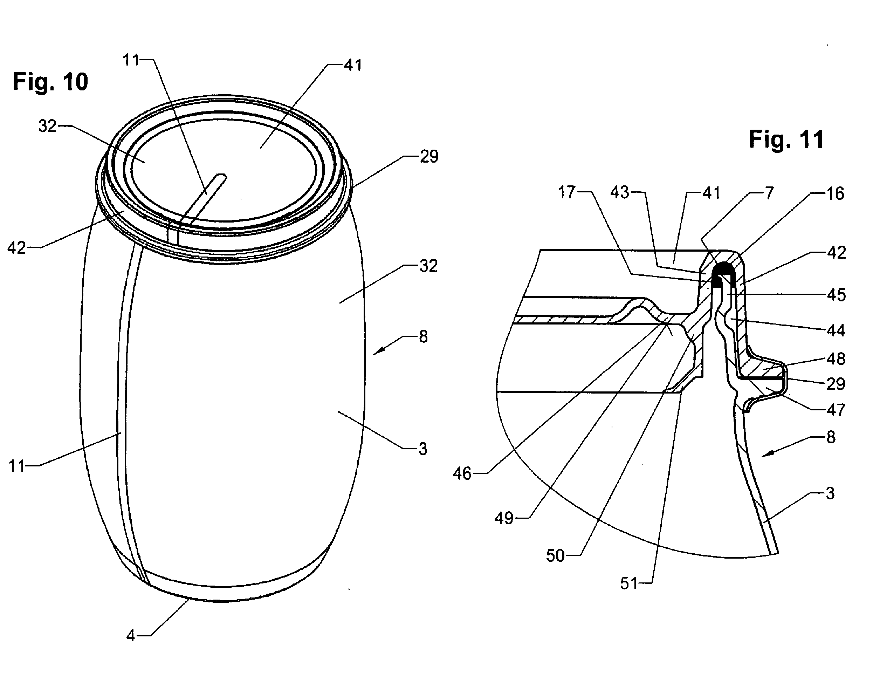

Nach dem vorbeschriebenen Verfahren können auch Weithalsfässer 8 ohne Fußring mit einem gerundeten Übergang zwischen Faßrumpf 3 und Faßboden 4 hergestellt werden (Fig. 10).

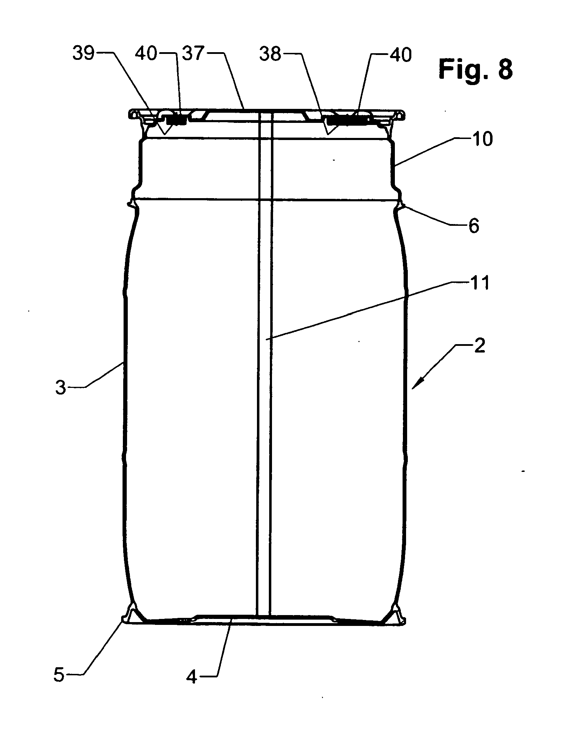

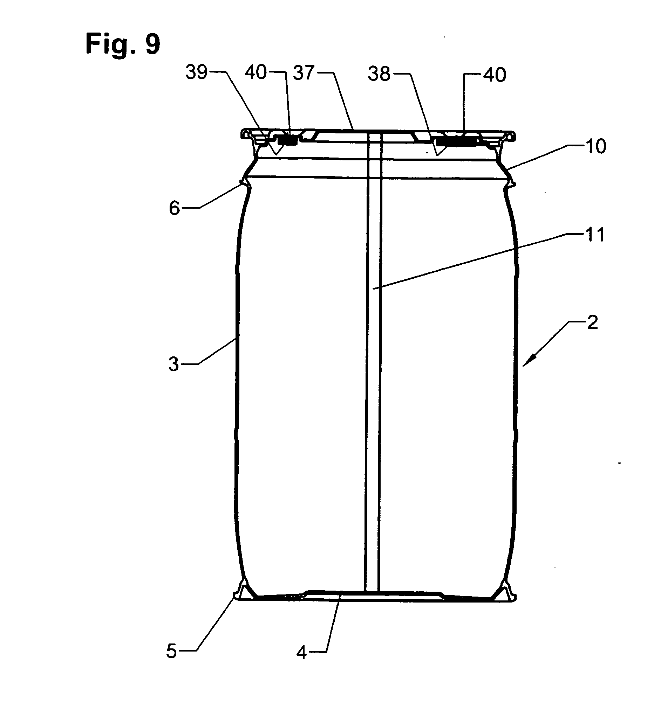

Ferner besteht die Möglichkeit, nach dem vorbeschriebenen Verfahren Weithalsfässer mit einem Spunddeckel 37 zu fertigen, der einen Befüll- und Entnahmespund 38 und einen Be- und Entlüftungsspund 39 aufweist (Fign. 8 und 9). Bei der Herstellung von Weithalsfässern mit Spunddeckel 37 wird die Blasluft zum Fertigblasen des geschlossenen Vorformlings über das Spundloch 40 eines der beiden Spunde 38, 39 mittels eines Blasdorns zugeführt. Über den bzw. die in den Zwischenring 10 des Faßkörpers eingeschossenen Blasdorn bzw. Blasdorne 14 kann Spülluft in den fertiggeblasenen Faßkörper zum Abkühlen desselben in der Blasform 1 eingeleitet werden. Bei der Einleitung von Spülluft durch einen oder beide Spunde 39, 40 des Spunddeckels 37 des fertiggeblasenen Faßkörpers 2 sind Einschießblasdorne im Zwischenring 10 nicht mehr erforderlich, so daß der Zwischenring schmaler gestaltet werden kann (Fig. 9).

Die Fign. 10 und 11 zeigen ein nach dem vorbeschriebenen Verfahren hergestelltes Weithalsfaß 8 mit einem geschlossenen Deckel oder einem Spunddeckel 41, der einen Außenrand 42 und einen Innenrand 43 mit einem nach unten offenen Ringraum 44 mit einem Dichtungsbett 16 zur Aufnahme einer Deckeldichtung 17 aufweist, wobei der auf einem Faßrumpf 3 befestigte Deckel 41 mit seinem Außenrand 42 den Faßhals 45 umschließt und mit seinem Innenrand 43, der über den unterhalb des Faßöffnungsrandes 7 gelegenen Deckelboden 46 vorsteht, in den Faßhals 45 eintaucht und der Deckel 41 mit einem Spannring 29, der an einer mit Abstand unterhalb des Öffnungsrandes 7 angeformten Bordur 47 des Faßrumpfes 3 und an einem Ringflansch 48 des Deckelaußenrandes 42 angreift, auf dem Faßrumpf 3 befestigt wird.

In dem Eckbereich zwischen der Unterseite 49 des Deckelbodens 46 und dem Innenrand 43 des Faßdeckels 41 ist ein umlaufender Versteifungswulst 50 angeformt und an dem unteren Ende des Innenrandes 43 des Faßdeckels 41 ist ein konischer Versteifungsring 51 angeordnet.

Das vorbeschriebene Verfahren kann zur Herstellung von Weithalsfässern eingesetzt werde, die nicht elektrisch geerdet sind. In diesem Fall ist der in eine Blasform extrudierte ein- oder mehrschichtige Kunststoffschlauch nicht mit einem elektrisch leitfähigen Kunststoffmaterial ausgerüstet.

## Patentansprüche

1. Verfahren zur Herstellung von Weithalsfässern (8)aus thermoplastischem Kunststoff mit einem abnehmbaren Deckel (9) und einem Spannringverschluß (29), wobei ein mehrschichtiger Kunststoffschlauch in eine Blasform (1) extrudiert und zu einem Faßkörper (2) geblasen wird, **gekennzeichnet durch** das Koextrudieren eines mehrschichtigen Schlauches aus einem nichtleitenden Grundwerkstoff mit mindestens einem auf dem Umfang angeordneten Abschnitt, einem Kontaktstreifen aus einem elektrisch leitenden Kunststoffmaterial, das Vorblasen des Schlauches zu einem Vorformling und das Fertigblasen des Vorformlings zu einem elektrisch geerdeten Fasskörper (2) mit einem Fassrumpf (3), einem Boden (4) mit oder ohne Fußring (5), einer Bordur (6, 47) am Fassrumpf (3) zum Anbringen eines Deckels (9, 37, 41) mit Spannringverschluß (29), wobei die Bordur (6, 47) in Höhe oder mit Abstand unterhalb des Öffnungsrandes (7) des herzustellenden Weithalsfasses (8) am Fassrumpf (3) angeformt wird, einem geschlossenen Deckel (9, 41) oder einem Spunddeckel (37, 41), einem Zwischenring (10) zwischen Bordur (6) und Deckel (9, 37) oder Fassöffnungsrand (7) und Deckel (41) sowie mit mindestens einem in den Fassdeckel (9, 37, 41), den Zwischenring (10), den Fassrumpf (3) und den Fassboden (4) integrierten elektrisch leitenden Kontaktstreifen (11), der eine elektrische Verbindung zwischen der Innenfläche (12) und der Oberfläche (13) des Fasskörpers (2) bildet und dessen Stärke der Wandstärke (36) des Fasskörpers (2) entspricht, wobei die Blasluft zum Fertigblasen eines geschlossenen Vorformlings zu einem Fasskörper (2) mit einem geschlossenen Deckel (9) über mindestens einen in den Zwischenring (10) eingeführten Einschießblasdorn (14) und die Blasluft zum Fertigblasen eines geschlossenen Vorformlings zu einem Fasskörper (2) mit einem Spunddeckel (37) über das Spundloch (40) mindestens eines Spundes (38) des Spunddeckels (37) mittels eines Blasdorns (14) und/oder **durch** mindestens einen in den Zwischenring (10) eingeführten Blasdorn (14) zugeführt wird und wobei nach dem Abkühlen des Fasskörpers (2) in der Blasform (1) und dem Entformen des Fasskörpers (2) Fassrumpf (3) und Deckel (9, 37, 41) **durch** Herausschneiden des Zwischenringes (10) aus dem Fasskörper (2) voneinander getrennt werden und nach dem Einlegen eines Dichtringes (17) in das Dichtungsbett (16) eines Deckels (9, 37, 41) dieser mittels eines Spannringes (29) an der Bordur (6, 47) eines Fassrumpfes (3) befestigt wird.

2. Verfahren nach Anspruch 1, **gekennzeichnet durch** das Koextrudieren eines mehrschichtigen Kunststoffschlauches in eine Blasform, wobei der aus einem Extrusionskopf kontinuierlich oder diskontinuierlich austretende Materialschlauch an mindestens einer Stelle auf dem Umfang aufgespaltet und in den Spaltraum ein elektrisch leitfähiges Kunststoffmaterial zur Bildung eines Kontaktstreifens (11) eingespritzt wird, der mit dem Vorformling homogen verschweißt.

3. Verfahren nach Anspruch 1 und 2, **dadurch gekennzeichnet, daß** der in die Blasform (1) extrudierte Kunststoffschlauch zum Blasen eines Faßkörpers (2) aus einer Innenschicht (30) und einer leitfähigen oder dauerantistatischen Außenschicht (32) besteht.

4. Verfahren nach Anspruch 1 und 2, **dadurch gekennzeichnet, daß** der in die Blasform (1) extrudierte Kunststoffschlauch zum Blasen eines Faßkörpers (2) durch eine Innenschicht (30), eine Mittelschicht (31) und eine leitfähige oder dauerantistatische Außenschicht (32) gebildet wird.

5. Verfahren nach Anspruch 4, **dadurch gekennzeichnet, daß** zwischen Innenschicht (30) und Mittelschicht (31) des in die Blasform (1) extrudierten Vorformlings eine Sperrschicht(33) angeordnet ist, die in zwei Haftvermittlerschichten (34, 35) eingebettet ist.

6. Verfahren nach einem der Ansprüche 1 bis 5, **gekennzeichnet durch** das Einleiten von Spülluft über mindestens einen in den Zwischenring (10) des fertiggeblasenen Faßkörpers (2) eingeschossenen Blasdorn (14).

7. Verfahren nach einem der Ansprüche 1 bis 6, **dadurch gekennzeichnet, daß** die Schnittkanten (27, 28) der Faßrümpfe (3) und der Deckel (9, 37, 41) nach dem Herausschneiden des Zwischenringes (10) zum Entfernen des Schnittgrates mit Heißluft beflammt werden und Faßrümpfe (3) und Deckel (9, 27, 31) vor der Endmontage der Weithalsfässer (8) eine Kühlstrecke durchlaufen.

8. Verfahren nach einem der Ansprüche 1 bis 7, **gekennzeichnet durch** das Blasformen eines Faßkörpers (2) mit einem geschlossenen Deckel (9) oder einem Spunddeckel, die einen nach unten offenen U-förmigen Außenrand (15) mit einem Dichtungsbett (16) zur Aufnahme einer Deckeldichtung (17) aufweisen, das Verpressen des Deckelrandes (15) und dessen Dichtungsbettes (16) **durch** zwei sich gegenläufig bewegende Formschieber (18, 19) sowie eine Innen- und Außenkühlung des Deckelrandes (15) **durch** die Formschieber (18, 19).

9. Verfahren nach Anspruch 8, **gekennzeichnet durch** das Anformen eines umlaufenden Versteifungswulstes (20) an den Übergangsabschnitt (21) zwischen einer an den Außenrand (15) des Faßdeckels (9) anschließenden Eingreifnut (22) für einen Faßgreifer und einem unterhalb der Eingreifnut (22) angeformten Ringsteg (23) zur Versteifung des Faßdeckels (9).

10. Verfahren nach einem der Ansprüche 1 bis 7, **gekennzeichnet durch** das Blasformen eines Faßkörpers (2) mit einem geschlossenen Deckel oder einem Spunddeckel (41), der einen Außenrand (42) und einen Innenrand (43) mit einem nach unten offenen Ringraum (44) mit einem Dichtungsbett (16) zur Aufnahme einer Deckeldichtung (17) aufweist, wobei der auf einem Faßrumpf (3) befestigte Deckel (41) mit seinem Außenrand (42) dem Faßhals (45) umschließt und mit seinem Innenrand (43), der über den unterhalb des Faßöffnungsrandes (7) gelegenen Deckelboden (46) vorsteht, in den Faßhals (45) eintaucht und der Deckel (41) mit einem Spannring (29), der an einer mit Abstand unterhalb des Faßöffnungsrandes (7) angeformten Bordur (47) des Faßrumpfes (3) und einem Ringflansch (48) des Deckelaußenrandes (42) angreift, auf dem Faßrumpf (3) befestigt wird, das Verpressen des Deckelrandbereiches (42, 43) **durch** zwei gegenläufig arbeitende Formschieber sowie eine Innen -und Außenkühlung des Deckelrandbereiches **durch** die Formschieber.

11. Verfahren nach Anspruch 10, **gekennzeichnet durch** das Anformen eines umlaufenden Versteifungswulstes (50) an den Eckbereich zwischen der Unterseite (49) des Deckelbodens (46) und dem Innenrand (43) des Faßdeckels (41).

12. Verfahren nach Anspruch 10 und 11, **gekennzeichnet durch** das Anformen eines konischen Versteifungsrings (51) an das untere Ende des Innenrandes (43) des Faßdeckels (41).

## Claims

1. Method for the production of wide-necked barrels (8) made of thermoplastic material with a removable cover (9) and a clamping ring closure (29), a multilayer plastic material hose being extruded into a blow-mould (1) and being blow-moulded to form a barrel body (2), **characterised by** co-extrusion of a multilayer hose made of a non-conductive basic material having at least one portion disposed on the circumference, a contact strip made of an electrically conductive plastic material, pre-blowing of the hose to form a preform and final blowing of the preform to form an electrically earthed barrel body (2) having a barrel shell (3), a base (4) with or without a foot ring (5), a border (6, 47) on the barrel shell (3) for attaching a cover (9, 37, 41) with a clamping ring closure (29), the border (6, 47) being moulded onto the barrel shell (3) at the level of or at a spacing below the opening edge (7) of the wide-necked barrel (8) to be produced, a closed cover (9, 41) or a bung cover (37, 41), an intermediate ring (10) between border (6) and cover (9, 37) or barrel opening edge (7) and cover (41) and also having at least one electrically conductive contact strip (11) which is integrated in the barrel cover (9, 37, 41), the intermediate ring (10), the barrel shell (3) and the barrel base (4), said contact strip forming an electrical connection between the inner surface (12) and the outer surface (13) of the barrel body (2) and the thickness thereof corresponding to the wall thickness (36) of the barrel body (2), the blown air for final blowing of a closed preform to form a barrel body (2) with a closed cover (9) being supplied via at least one inflation mandrel (14) which is introduced into the intermediate ring (10), and the blown air for final blowing of a closed preform to form a barrel body (2) with a bung cover (37) being supplied via the bung hole (40) at least of one bung (38) of the bung cover (37) by means of an inflation mandrel (14) and/or by means of at least one inflation mandrel (14) which is introduced into the intermediate ring (10) and, after cooling of the barrel body (2) in the blow-mould (1) and after release of the barrel body (2) from the mould, barrel shell (3) and cover (9, 37, 41) being separated from each other by cutting out of the intermediate ring (10) from the barrel body (2) and, after insertion of a sealing ring (17) into the sealing bed (16) of a cover (9, 37, 41), the latter being mounted on the border (6, 47) of a barrel shell (3) by means of a clamping ring (29).

2. Method according to claim 1, **characterised by** co-extrusion of a multilayer plastic material hose into a blow-mould, the material hose which emerges continuously or discontinuously from an extrusion head being split on the circumference at at least one point and an electrically conductive plastic material being injected into the gap space in order to form a contact strip (11) which is welded homogeneously to the preform.

3. Method according to claim 1 and 2, **characterised in that** the plastic material hose which is extruded into the blow-mould (1) for blow-moulding a barrel body (2) comprises an inner layer (30) and a conductive or permanently antistatic outer layer (32).

4. Method according to claim 1 and 2, **characterised in that** the plastic material hose which is extruded into the blow-mould (1) for blow-moulding a barrel body (2) is formed by an inner layer (30), a central layer (31) and a conductive or permanently antistatic outer layer (32).

5. Method according to claim 4, **characterised in that** a barrier layer (33) is disposed between inner layer (30) and central layer (31) of the preform which is extruded into the blow-mould (1), said barrier layer being embedded in two adhesion-promoting layers (34, 35).

6. Method according to one of the claims 1 to 5, **characterised by** the introduction of flushing air via at least one inflation mandrel (14) which is inserted into the intermediate ring (10) of the final blown barrel body (2).

7. Method according to one of the claims 1 to 6, **characterised in that** the cut edges (27, 28) of the barrel shells (3) and of the covers (9, 37, 41), after cutting out of the intermediate ring (10), are flame-treated with hot air in order to remove the wire edge and barrel shells (3) and covers (9, 27, 31) pass through a cooling stretch before final assembly of the wide-necked barrels (8).

8. Method according to one of the claims 1 to 7, **characterised by** the blow-moulding of a barrel body (2) with a closed cover (9) or a bung cover which have a U-shaped outer edge (15), which is open at the bottom and has a sealing bed (16), for receiving a cover seal (17), compressing the cover edge (15) and the sealing bed (16) thereof by means of two mould slides (18, 19) which move in opposite directions and also internal and external cooling of the cover edge (15) by means of the mould slides (18, 19).

9. Method according to claim 8, **characterised by** moulding-on of a circumferential reinforcing bead (20) onto the transition portion (21) between an engaging groove (22) which abuts on the outer edge (15) of the barrel cover (9) for a barrel gripper and an annular web (23) which is moulded on below the engaging groove (22) for reinforcing the barrel cover (9).

10. Method according to one of the claims 1 to 7, **characterised by** blow-moulding of a barrel body (2) with a closed cover or a bung cover (41) which has an outer edge (42) and an inner edge (43) with an annular space (44), which is open at the bottom and has a sealing bed (16), for receiving a cover seal (17), the cover (41), which is mounted on a barrel shell (3), surrounding the barrel neck (45) with its outer edge (42) and, with its inner edge (43) which projects beyond the cover base (46) situated below the barrel opening edge (7), penetrating into the barrel neck (45), and the cover (41) being mounted on the barrel shell (3) with a clamping ring (29) which engages on a border (47) of the barrel shell (3), which is moulded on at a spacing below the barrel opening edge (7), and on an annular flange (48) of the cover outer edge (42), compressing the cover edge region (42, 43) by means of two mould slides which operate in opposite directions and also an internal and external cooling of the cover edge region by means of the mould slides.

11. Method according to claim 10, **characterised by** moulding-on of a circumferential reinforcing bead (50) on the corner region between the underside (49) of the cover base (46) and the inner edge (43) of the barrel cover (41).

12. Method according to claim 10 or 11, **characterised by** moulding-on of a conical reinforcing ring (51) on the lower end of the inner edge (43) of the barrel cover (41).

## Revendications

1. . Procédé de fabrication de fûts à goulot large (8) en matière thermoplastique , munis d' un couvercle (9) amovible et d' une fermeture par bague de serrage (29), selon lequel un tube souple en matière plastique ayant plusieurs couches est extrudé dans un moule de soufflage (1) et est transformé par soufflage en un corps de fût (2), **caractérisé par** la coextrusion d' un tube souple à- plusieurs couches en un matériau de base non conducteur ayant au moins une section disposée sur le pourtour , une bande de contact en une matière plastique conductrice de l' électricité , le présoufflage du tube pour obtenir une ébauche et le soufflage final de l' ébauche pour obtenir un corps de fût (2) mis électriquement à la terre , comprenant un tronc de fût (3), un fond (4) pourvu ou non de manille (5), une bordure (6 , 47) disposée sur le tronc de fût (3) pour la pose d' un couvercle (9 , 37 , 41) muni d' une fermeture par bague de serrage (29), la bordure (6 , 47) étant formée sur le tronc de fût (3) au niveau ou à une certaine distance au-dessous du bord d' ouverture (7) du fût à goulot large (8) à fabriquer , un couvercle (9 , 41) fermé ou un couvercle de bonde (37 , 41) , une bague intermédiaire (10) disposée entre la bordure (6) et le couvercle (9 , 37) ou le bord d' ouverture (7) du fût et le couvercle (41), ainsi qu' au moins une bande de contact (11) conductrice de l' électricité , intégrée dans le couvercle de fût (9 , 37 , 41), la bague intermédiaire (10), le tronc de fût (3) et le fond de fût (4) et formant une liaison électrique entre la face intérieure (12) et la surface (13) du corps de fût (2), et dont l' épaisseur correspond à l' épaisseur de paroi (36) du corps de fût (2), selon lequel l' air de soufflage , destiné au soufflage final d' une ébauche fermée devant devenir un corps de fût (2) comprenant un couvercle (9) fermé , est acheminé au moyen d' au moins un mandrin d' insufflation (14) introduit dans la bague intermédiaire (10), et l' air de soufflage destiné au soufflage final d' une ébauche fermée devant devenir un corps de fût (2) comprenant un couvercle de bonde (37) est acheminé via le trou de bonde (40) d' au moins une bonde (38) du couvercle de bonde (37) au moyen d' un mandrin de soufflage (14) et/ou d' au moins un mandrin de soufflage (14) introduit dans la bague intermédiaire (10), et selon lequel , après le refroidissement du corps de fût (2) dans le moule de soufflage (1) et le démoulage du corps de fût (2), le tronc de fût (3) et le couvercle (9 , 37 , 41) sont séparés l' un de 1' autre par enlèvement par découpage de la bague intermédiaire (10) du corps de fût (2) et , après la pose d' une bague d' étanchéité (17) dans le lit d' étanchéité (16) d' un couvercle (9 , 37 , 41), celui-ci est fixé sur la bordure (6 , 47) d' un tronc de fût (3) à l' aide d' une bague de serrage (29) .

2. . Procédé selon la revendication 1 , **caractérisé par** la coextrusion d' un tube souple en matière plastique ayant plusieurs couches dans un moule de soufflage , le tube de matière sortant en continu ou en discontinu d' une tête d' extrusion étant fendu sur au moins une zone du pourtour et une matière plastique conductrice de l' électricité étant injectée dans l' espace fendu pour la formation d' une bande de contact (11) qui est soudée de manière homogène à l' ébauche .

3. . Procédé selon la revendication 1 et 2 , **caractérisé en ce que** le tube en matière plastique extrudé dans le moule de soufflage (1), pour le soufflage d' un corps de fût (2), est constitué d' une couche intérieure (30) et d' une couche extérieure (32) conductrice ou antistatique en longue durée .

4. . Procédé selon la revendication 1 et 2 , **caractérisé en ce que** le tube en matière plastique extrudé dans le moule de soufflage (1), pour le soufflage d' un corps de fût (2), est formé par une couche intérieure (30), une couche médiane (31) et une couche extérieure (32) conductrice ou antistatique en longue durée .

5. . Procédé selon la revendication 4 , **caractérisé en ce qu'** une couche d' arrêt (33), qui est incorporée dans deux couches d' agent adhésif (34 , 35), est interposée entre la couche intérieure (30) et la couche médiane (31) de l' ébauche extrudée dans le moule de soufflage (1) .

6. . Procédé selon l' une des revendications 1 à 5 , **caractérisé par** l' introduction d' air de balayage au moyen d' au moins un mandrin de soufflage (14) introduit dans la bague intermédiaire (10) du corps de fût (2) soufflé à sa forme finale .

7. . Procédé selon l' une des revendications 1 à 6 , **caractérisé en ce que** les bords coupés (27 , 28) des troncs de fût (3) et des couvercles (9 , 37 , 41) sont flambés avec de l' air chaud pour éliminer la bavure de coupe après l' enlèvement par découpage de la bague intermédiaire (10), et les troncs de fût (3) et les couvercles (9 , 27 , 31) traversent une section de refroidissement avant le montage final des fûts à goulot large (8) .

8. . Procédé selon 1' une des revendications 1 à 7 , **caractérisé par** le moulage par soufflage d' un corps de fût (2) comprenant un couvercle (9) fermé ou un couvercle de bonde , qui présentent un bord extérieur (15) en forme de U , ouvert vers le bas , ayant un lit d' étanchéité (16) servant à recevoir un joint de couvercle (17), la compression du bord de couvercle (15) et de son lit d' étanchéité (16) par deux coulisses de moule (18 , 19) se déplaçant en directions contraires ainsi qu' un refroidissement intérieur et extérieur du bord de couvercle (15) par les coulisses de moule (18 , 19)

9. . Procédé selon la revendication 8 , **caractérisé par** la formation d' un bourrelet de renforcement (20) périphérique sur la section de transition (21) entre une gorge d' engagement (22) reliée au bord extérieur (15) du couvercle de fût (9), pour un grappin de fûts , et une nervure annulaire (23) formée au-dessous de la gorge d' engagement (22) pour le renforcement du couvercle de fût (9).

10. . Procédé selon l' une des revendications 1 à 7 , **caractérisé par** le formage par soufflage d' un corps de fût (2) comprenant un couvercle fermé ou un couvercle de bonde (41) qui présente un bord extérieur (42) et un bord intérieur (43) avec un espace annulaire (44) ouvert vers le bas et comportant un lit d' étanchéité (16) servant à recevoir un joint de couvercle (17), le couvercle (41) fixé sur un tronc de fût (3) entourant par son bord extérieur (42) le goulot de fût (45) et plongeant dans le goulot de fût (45) par son bord intérieur (43), qui fait saillie du fond de couvercle (46) situé au-dessous du bord d' ouverture (7) du fût , et le couvercle (41) étant fixé sur le tronc de fût (3) par une bague de serrage (29) qui prend appui sur une bordure (47) du tronc de fût (3), formée à une certaine distance au-dessous du bord d' ouverture (7) du fût , et sur un rebord annulaire (48) du bord extérieur (42) du couvercle , la compression de la zone de bordure (42 , 43) du couvercle par deux coulisses de moule fonctionnant en directions opposées ainsi qu' un refroidissement intérieur et extérieur de la zone de bordure du couvercle par les coulisses de moule .

11. . Procédé selon la revendication 10 , **caractérisé par** la formation d' un bourrelet de renforcement (50) périphérique au niveau de la zone d' angle entre la face inférieure (49) du fond de couvercle (46) et le bord intérieur (43) du couvercle de fût (41) .

12. . Procédé selon les revendications 10 et 11 , **caractérisé par** la formation d' une bague de renforcement (51) conique à 1' extrémité inférieure du bord intérieur (43) du couvercle de fût (41) .
